# FASCICULE DE BREVET EUROPEEN

(11) **EP 0 868 008 B1**
(45) Date de publication et mention de la délivrance du brevet: **17.09.2003**
(21) Numéro de dépôt: 98400716.1
(22) Date de dépôt: 26.03.1998
(51) Int. Cl.: H02K 5/22

(54) **Procédé d'assemblage d'un moteur électrique**
Montageverfahren für einen elektrischen Motor
Method of assembling an electric motor

(30) Priorité: 27.03.1997 FR 9703786
(43) Date de publication de la demande: 30.09.1998
(73) Titulaire: VALEO SYSTEMES D'ESSUYAGE, 78321 La Verrière (FR)
(72) Inventeur: Hamdi, Rachid, 78990 Elancourt (FR); Alleaume, Wilfrid, 78000 Versailles (FR); Brisset, Anthony, 78310 Maurepas (FR)
(74) Mandataire: Le Forestier, Eric

(56) Documents cités:
- EP-A- 0 360 623
- EP-A- 0 539 094
- EP-A- 0 655 822
- GB-A- 2 232 011
- GB-A- 2 246 672

## Description

L'invention concerne les moteurs électriques, notamment les motoventilateurs pour véhicule automobile.

Pour assembler un moteur de motoventilateur, il est connu de fixer un connecteur à la platine porte-balais du moteur. On fixe ensuite la platine aux autres parties du moteur, notamment le carter cylindrique. Le connecteur est configuré pour s'étendre en saillie à l'extérieur du carter une fois le moteur achevé. Lors de la pose du motoventilateur sur le véhicule, ce connecteur est destiné à recevoir un boîtier de connexion du véhicule.

Il s'avère que ce boîtier de connexion a une configuration spécifique adaptée en fonction de chaque modèle de véhicule. Il faut donc fixer à la platine un connecteur ayant lui-même une forme spécifique correspondant au boîtier de connexion final. Il s'ensuit plusieurs inconvénients. D'abord, il est nécessaire de concevoir une platine porte-balais spécifique pour recevoir chaque connecteur, quand ce n'est pas d'autres pièces du moteur qui doivent également avoir une forme spécifique adaptée. Ensuite, il est nécessaire de fournir en amont de la chaîne d'assemblage plusieurs références de platines et plusieurs références de connecteurs. De plus, les moteurs assemblés sont différents les uns des autres dans toute la suite de la chaîne. Cette hétérogénéité des moteurs dans toutes la chaîne nuit à la flexibilité et à la qualité de la production.

On souhaite donc disposer d'un procédé permettant l'assemblage de moteurs différents tout en réduisant le nombre de références de pièces nécessaires en amont de la chaîne et en améliorant la flexibilité et la qualité de la production.

Les documents EP-0 360 623-A2 et EP-0 655 822-A1 divulguent des ensembles comprenant un moteur électrique et au moins deux connecteurs pour le moteur électrique, chaque connecteur comportant une extrémité de connexion pour moteur adaptée à connecter électriquement le connecteur à un même emplacement de connexion du moteur lorsqu'on rapporte le connecteur sur le moteur, chaque connecteur comportant en outre une extrémité de connexion externe adaptée à connecter électriquement le connecteur à un élément autre que le moteur, les extrémités de connexion externes des connecteurs ayant des configurations différentes l'une de l'autre, l'emplacement de connexion (28) comportant des bornes de moteur, et chaque extrémité de connexion pour moteur comportant des bornes de connecteur.

Toutefois, ces ensembles ne permettent pas de garantir qu'après connexion, les bornes du moteur et du connecteur sont convenablement fixées, et/ou connectées entre elles.

Le document GB-2 232 011 pévoit un ensemble constitué d'un moteur et d'un connecteur amovible. Suivant que le connecteur est monté ou non sur le moteur, l'ensemble offre deux configurations de connection differentes.

Un but de l'invention est de garantir, après fixation du connecteur au moteur, une bonne fixation et/ou une bonne connexion électrique des bornes entre elles.

En vue de la réalisation de ce but on prévoit selon l'invention un procédé d'assemblage conforme à la revendication.

D'autres caractéristiques et avantages de l'invention apparaîtront encore dans la description qui va suivre d'un mode préféré de mise en oeuvre donné à titre d'exemple non limitatif. Aux dessins annexés :
- les figures 1 et 2 sont deux vues en perspective d'une platine porte-balais d'un moteur montrant respectivement deux faces opposées de la platine;
- la figure 3 est une vue en perspective d'un moteur d'un ensemble comprenant la platine des figures 1 et 2, avant fixation d'un connecteur ;
- la figure 4 est une vue analogue à la figure 3, avec un connecteur de l'ensemble fixé au moteur ;
- la figure 5 est une vue du moteur de la figure 4 montrant l'étape de soudage des bornes ;
- la figure 6 est un schéma électrique du dispositif de soudage ;
- la figure 7 est une vue partielle en perspective d'un autre connecteur de l'ensemble; et
- la figure 8 est une vue analogue à la figure 4 montrant le moteur assemblé ; et
- la figure 9 est une vue analogue à la figure 4 montrant le moteur avec un connecteur différent des deux connecteurs précités, fixé au moteur.

Dans le présent mode de mise en oeuvre le moteur 2 est destiné à un motoventilateur de véhicule automobile.

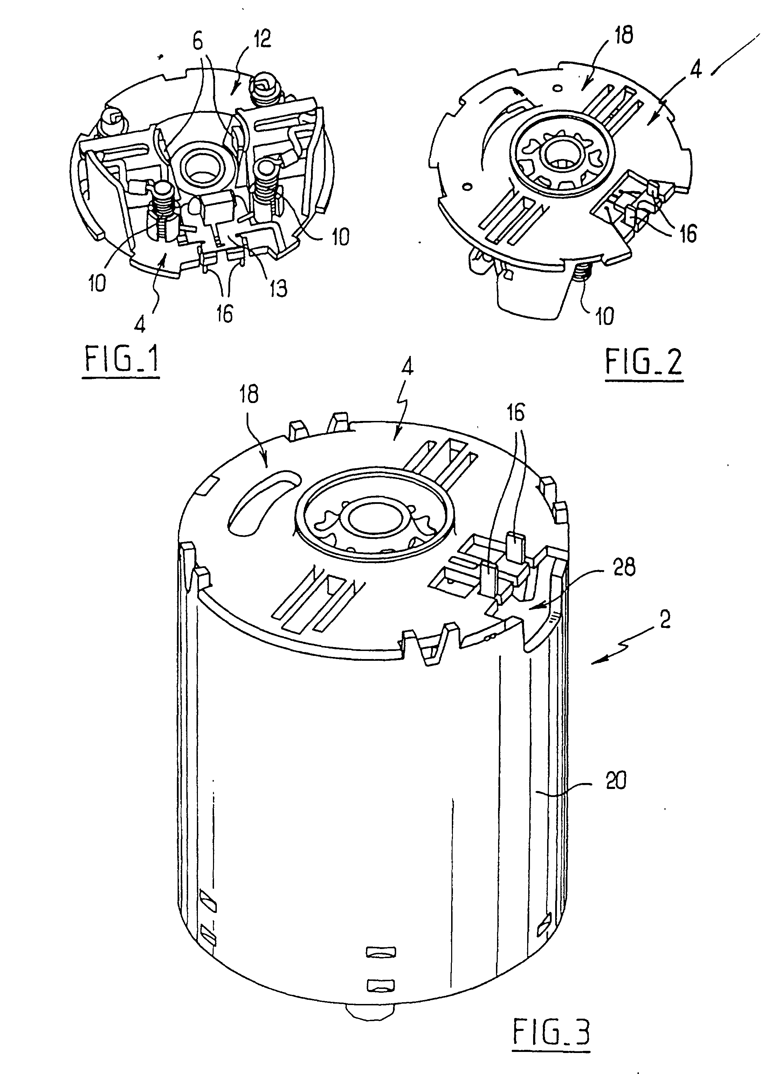

En référence aux figures 1 à 3, le moteur comporte une platine 4 portant de façon connue deux balais 6 destinés à venir en contact avec un collecteur du moteur, et comportant des composants électroniques connus 10, balais et composants s'étendant sur une même face intérieure plane 12 de la platine. La platine comporte un élément de connexion 13 comportant deux languettes métalliques rectangulaires planes 16, parallèles entre elles, et s'étendant en regard et à distance l'une de l'autre avec leurs contours en coïncidence mutuelle. Cet élément de connexion 13 est fixé à la face intérieure 12 de la platine de sorte que les deux languettes 16 traversent l'épaisseur de la platine et s'étendent en saillie d'une face extérieure 18 de la platine opposée à la face intérieure 12. Les deux languettes 16 s'étendent perpendiculairement à la face extérieure qui est sensiblement plane. Les deux languettes 16 sont adjacentes à un bord de la platine. La platine 4 est configurée de sorte que les languettes 16 constituent deux bornes de connexion connectées électriquement de façon opérationnelle aux balais 6 et aux composants 10.

La platine 4 est adaptée à être fixée à une extrémité axiale d'un carter cylindrique 20 du moteur 2, de sorte que la platine s'étend perpendiculairement à un axe du moteur, la face extérieure 18 s'étendant à l'extérieur du moteur. Dans cette configuration, les deux languettes 16 s'étendent donc en saillie de la face extérieure 18 d'extrémité axiale du moteur, à l'extérieur du moteur.

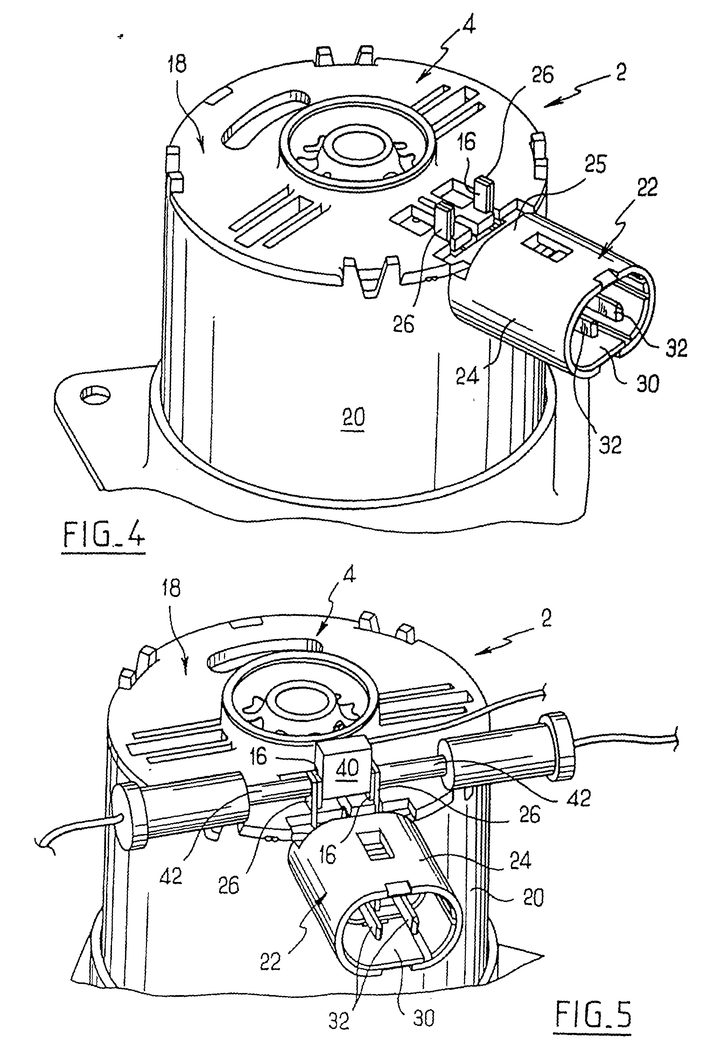

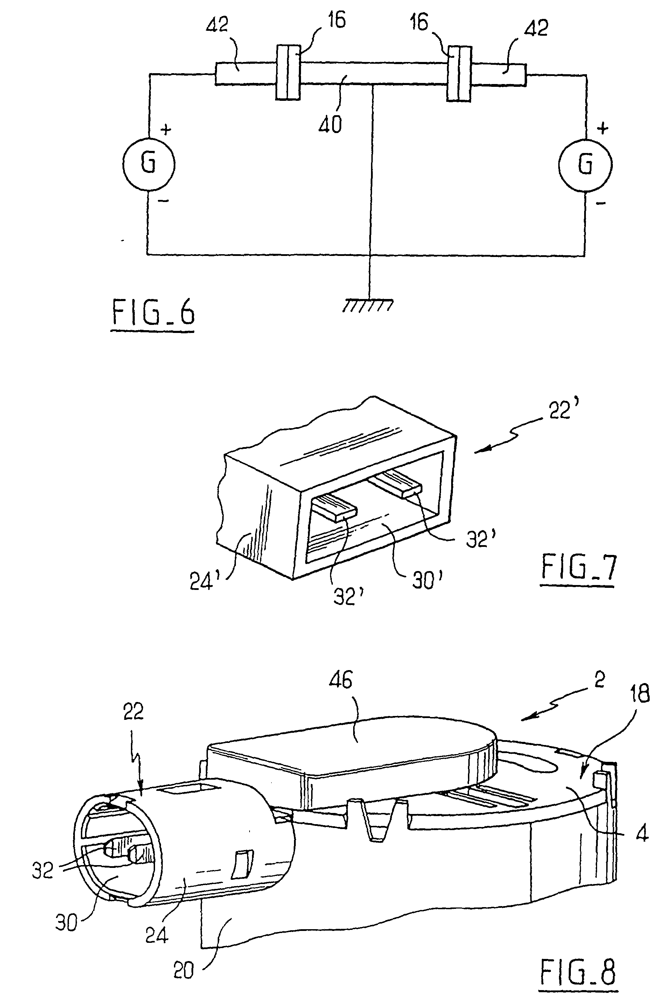

L'ensemble comprend un moteur 2 de ce type et plusieurs connecteurs, par exemple au nombre de deux 22 et 22' en référence aux figures 4 et 7.

Chacun des deux connecteurs 22 et 22' comporte un corps 24, 24' et une extrémité de connexion 25 pour moteur adaptée à connecter électriquement de façon opérationnelle le connecteur aux languettes 16 du moteur 2. Les extrémités de connexion 25 pour moteur sont en l'espèce identiques sur les deux connecteurs 22, 22', et comprennent deux languettes métalliques planes rectangulaires 26 faisant office de bornes de connexion, s'étendant parallèlement l'une de l'autre, en regard et à distance l'une à l'autre en ayant leurs contours en coïncidence. Les deux languettes de connecteur 26 s'étendent en saillie du corps 24, 24' du connecteur.

La platine 4 et le carter 2 du moteur sont évidés sur des zones mutuellement adjacentes, pour définir sur le moteur un emplacement de connexion 28 accessible depuis l'extérieur du moteur et adapté à recevoir au choix l'un ou l'autre des connecteurs 22, 22 . Cet emplacement 28 présente deux échancrures parallèles entre elles, s'étendant dans l'épaisseur de la platine 4, traversées par les languettes 16 du moteur et débouchant dans l'emplacement de connexion 28. Chaque extrémité de connexion pour moteur 25 des connecteurs 22, 22' est adaptée à être reçue à l'emplacement de connexion 28 comme sur la figure 4 avec le connecteur s'étendant extérieurement en saillie du carter 20 suivant la direction radiale. Dans cette position, les deux languettes 26 du connecteur s'étendent dans les échancrures respectives et sont en contact avec les deux languettes 16 respectives. Dans cette position, les quatre languettes 16, 26 sont parallèles entre elles et ont leurs contours rectangulaires en coïncidence. Les quatre languettes s'étendent à l'extérieur du carter du moteur, en saillie de la platine 4 suivant la direction axiale du moteur. Les deux paires de languettes 16, 26 en contact mutuel sont séparées par un espace. Dans cette position, le connecteur 22 ou 22' fixé au moteur (sur les figures le connecteur 22) est connecté électriquement de façon opérationnelle au moteur. Les languettes 26 du connecteur sont retenues mécaniquement en l'espèce par friction dans les échancrures de la platine de sorte que le connecteur est fixé au moteur dès sa réception à l'emplacement de connexion 28. Alternativement, la retenue pourra également être obtenue par coincement, déformation, sertissage, etc. Dans cette position, la platine et le carter immobilisent le connecteur suivant la direction axiale dans les deux sens, par butée du corps du connecteur sur la platine et le socle.

Chaque connecteur 22, 22' comporte en outre une extrémité de connexion externe 30, 30' comprenant deux bornes 32, 32', adaptées à connecter électriquement le connecteur 22, 22' à un élément autre que le moteur, en l'espèce un faisceau électrique du véhicule destiné à recevoir le moteur. Les extrémités de connexion externe 30, 30' des deux connecteurs sont différentes l'une de l'autre. En l'espèce, sur le connecteur 22, l'extrémité de connexion 30 a un contour profilé ovale défini par le corps 22, et comprend deux languettes 32 parallèles entre elles avec leurs faces en regard l'une de l'autre. Sur le connecteur 22', l'extrémité de connecteur 30' a un contour à profil rectangulaire défini par le corps 22', et comprend deux languettes plates coplanaires 32. Chacune de ces extrémités de connexion 30, 30' est configurée pour coopérer avec un faisceau électrique spécifique d'un certain modèle de véhicule.

Dans le procédé d'assemblage selon l'invention, on assemble donc le moteur 2 jusqu'à l'état d'assemblage de la figure 3 où la platine 4 est fixée au carter 20. L'ensemble des deux connecteurs 22, 22' selon l'invention étant fourni, on choisit l'un de ces connecteurs en fonction du véhicule destiné à recevoir le motoventilateur, par exemple le connecteur 22, et on fixe ce connecteur à l'emplacement de connexion 28 du moteur tel que précité. Le moteur est alors dans l'état d'assemblage de la figure 4.

On soude ensuite entre elles les languettes 16, 26 de chaque paire de languettes. Pour cela, on dispose une cathode commune 40 de forme cylindrique entre les deux paires de languettes de sorte que les deux extrémités axiales de la cathode soient en contact avec la languette de chaque paire s'étendant en regard de l'autre paire, en l'espèce les languettes 16 de la platine 4. On dispose également deux anodes 42 de l'autre côté de chaque paire de languettes respective, en contact avec l'autre languette 26 de chaque paire. Chaque anode 42 est reliée à la borne positive d'un générateur G respectif. La cathode 40 et les bornes négatives des générateurs sont reliées à la masse. Dans cette configuration, on effectue le soudage l'une à l'autre des languettes 16, 26 de chaque paire par circulation d'un courant entre la cathode 40 et chaque anode 42, ce qui améliore la connexion électrique des languettes entre elles.

Lorsque la face extérieure 18 de la platine 4 est destinée à être exposée à l'environnement du véhicule, on place ensuite sur le moteur un capot de protection 46 recouvrant les bornes 16, 26.

L'ensemble permet ainsi de réaliser deux modèles différents de moteurs.

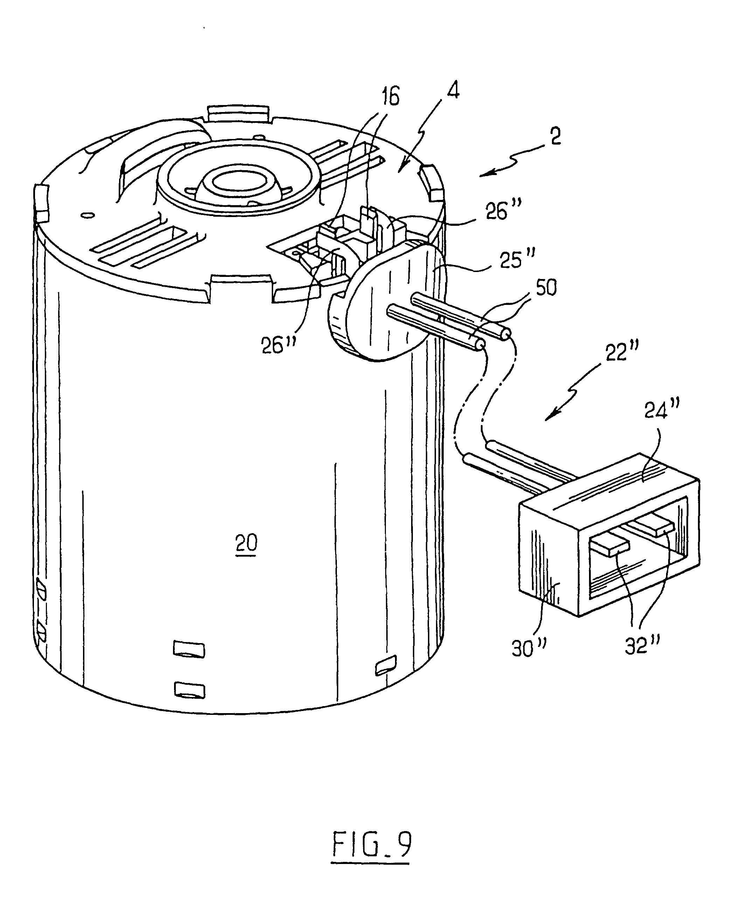

La figure 9 présente une variante de réalisation des connecteurs, le moteur 2 étant identique à ce qui précède.

Le connecteur 22" est différent des connecteurs 22, 22' et présente une extrémité de connexion pour moteur 25" comportant une plaquette "passe-fil" portant deux languettes 26" adaptées à être connectées aux languettes 16 du moteur lorsque l'extrémité de connexion 25" est reçue à l'emplacement de connexion du moteur. Chaque languette 26" a une forme plate et une découpe générale en "L". Le connecteur 22" présente également une extrémité de connexion externe 30" comprenant deux bornes 32" logées dans un boîtier. Cette extrémité de connexion externe 30" a une configuration différente de celles des connecteurs 22 et 22'. Les deux extrémités de connexion 25" et 30" du connecteur 22" sont reliées entre elles par deux fils conducteurs souples 50 appartenant à l'extrémité 30" et la connectant aux languettes 26". Ce connecteur est adapté par exemple à faire partie d'un ensemble selon l'invention comprenant le moteur 2 et les trois connecteurs 22, 22', 22", ou comprenant le moteur 2 et deux de ces trois connecteurs.

Bien entendu, l'ensemble pourra comprendre plus de trois connecteurs différents entre eux.

## Revendications

1. Procédé d'assemblage d'un moteur électrique comprenant les étapes consistant à :
- fournir un moteur électrique (2) ;
- fournir au moins deux connecteurs (22, 22') adaptés chacun à être fixés et connectés à un emplacement de connexion (28) du moteur, chaque connecteur comportant une extrémité de connexion externe (30, 30') adaptée à connecter le connecteur ainsi fixé à un élément autre que le moteur, les extrémités de connexion externes (30, 30') des connecteurs étant différentes l'une de l'autre, l'emplacement de connexion (28) comportant des bornes de moteur (16), et chaque extrémité de connexion pour moteur (25) comportant des bornes de connecteur (26), le moteur (2) et les connecteurs (22, 22') étant configurés de sorte que lorsque l'un au choix des connecteurs (22, 22') est reçu à l'emplacement de connexion (28), les bornes de moteur (16) et les bornes de connecteur (26) sont accessibles depuis l'extérieur du moteur et du connecteur;
- fixer au choix l'un des connecteurs (22, 22') à l'emplacement de connexion (28) du moteur, le moteur (2) et les connecteurs (22, 22') étant configurés de sorte que lorsque l'un au choix des connecteurs est reçu à l'emplacement de connexion (28) du moteur, les bornes (16) du moteur et les bornes (26) du connecteur sont mutuellement en contact électrique opérationnel pour la connexion électrique du moteur au connecteur; en vue du soudage, disposer une électrode commune (40) en contact avec les deux couples de bornes (16, 26) associées, et disposer deux autres électrodes (42) en contact avec les couples respectifs;et souder chaque borne de moteur à la borne de connecteur associée.

## Claims

1. Method of assembling an electric motor comprising the steps consisting of:
- providing an electric motor (2);
- providing at least two connectors (22, 22') each adapted to be fixed and connected to a connection location (28) on the motor, each connector having an external connection end (30, 30') adapted to connect the connector thus fixed to an element other than the motor, the external connection ends (30, 30') of the connectors being different from each other, the connection location (28) having motor terminals (16), and each connection end for a motor (25) having connector terminals (26), the motor (2) and the connectors (22, 22') being configured so that, when either one of the connectors (22, 22') is received at the connection location (28), the motors terminals (16) and the connector terminals (26) are accessible from the outside of the motor and the connector;
- fixing either one of the connectors (22, 22') to the connection location (28) of the motor, the motor (2) and the connectors (22, 22') being configured so that, when either one of the connectors is received at the connection location (28) of the motor, the terminals (16) of the motor and the terminals (26) of the connector are mutually in operational electrical contact for the electrical connection of the motor to the connector;
- with a view to soldering, disposing a common electrode (40) in contact with the two pairs of associated terminals (16, 26), and disposing two other electrodes (42) in contact with the respective pairs; and
- soldering each motor terminal to the associated connector terminal.

## Patentansprüche

1. Montageverfahren für einen Elektromotor, das Arbeitsgänge umfaßt, die darin bestehen:
- einen Elektromotor (2) bereitzustellen;
- wenigstens zwei Verbinder (22, 22') bereitzustellen, die jeweils an einer Anschlußstelle (28) des Motors befestigt und angeschlossen werden können, wobei jeder Verbinder ein äußeres Anschlußende (30, 30') umfaßt, um den so befestigten Verbinder an ein anderes Element als den Motor anzuschließen, wobei die äußeren Anschlußenden (30, 30') der Verbinder voneinander verschieden sind, wobei die Anschlußstelle (28) Motorklemmen (16) umfaßt und wobei jedes Anschlußende für den Motor (25) Verbinderklemmen (26) umfaßt, wobei der Motor (2) und die Verbinder (22, 22') so gestaltet sind, daß, wenn wahlweise einer der Verbinder (22, 22') an der Anschlußstelle (28) aufgenommen ist, die Motorklemmen (16) und die Verbinderklemmen (26) von außerhalb des Motors und des Verbinders aus zugänglich sind;
- wahlweise einen der Verbinder (22, 22') an der Anschlußstelle (28) des Motors zu befestigen, wobei der Motor (2) und die Verbinder (22, 22') so gestaltet sind, daß, wenn wahlweise einer der Verbinder an der Anschlußstelle (28) des Motors aufgenommen ist, die Klemmen (16) des Motors und die Klemmen (26) des Verbinders sich wechselweise in operativem elektrischem Kontakt im Hinblick auf den elektrischen Anschluß des Motors an den Verbinder befinden;
- im Hinblick auf die Verschweißung eine gemeinsame Elektrode (40) in Kontakt mit den zwei zugehörigen Klemmenpaaren (16, 26) anzuordnen und zwei weitere Elektroden (42) in Kontakt mit den jeweiligen Paaren anzuordnen; und
- jede Motorklemme an der zugehörigen Verbinderklemme anzuschweißen.
